# EUROPEAN PATENT APPLICATION

(11) **EP 4 572 529 A1**
(43) Date of publication of application: **18.06.2025**
(21) Application number: 24205847.7
(22) Date of filing: 10.10.2024
(51) Int. Cl.: H04W 88/04, H04W 92/18

(54) **COMMUNICATION METHOD, APPARATUS AND NON-TRANSITORY COMPUTERREADABLE STORAGE MEDIUM**

(30) Priority: 12.12.2023 CN 202311706667
(71) Applicant: Beijing Xiaomi Mobile Software Co., Ltd., Beijing 100085 (CN)
(72) Inventor: CHENG, Bin, Beijing, 100085 (CN); YUAN, Liping, Beijing, 100085 (CN); LI, Hong, Beijing, 100085 (CN)
(74) Representative: Dehns Germany Partnerschaft mbB

(57) **Abstract**

The present disclosure relates to a communication method, apparatus and non-transitory computer-readable storage medium. The communication method includes: receiving (S11), by a second device, a communication request sent by a first device, where the communication request is triggered by a first application on the first device; and, displaying (S12) a communication status responding to the communication request synchronously on the first application and a second application on the second device, where the first application and the second application are applications that support execution of a communication function corresponding to the communication request.

## Description

### TECHNICAL FIELD

The present disclosure relates to the field of communication technology, and in particular to a communication method, apparatus and non-transitory computer-readable storage medium.

### BACKGROUND

In the related art, with the continuous development of the communication technology, multi-device communication (short videos, calls, data) sharing has become a development trend.

### SUMMARY

In order to overcome the problems existing in the related art, the present disclosure provides a communication method, apparatus and storage medium.

According to a first aspect of embodiments of the present invention, there is provided a communication method, including: receiving, by a second device, a communication request sent by a first device, where the communication request is triggered by a first application on the first device; and, displaying a communication status responding to the communication request synchronously on the first application and a second application on the second device; where, the first application and the second application are applications that support execution of a communication function corresponding to the communication request.

Optionally, displaying the communication status responding to the communication request synchronously on the first application and the second application on the second device includes: sending the communication request synchronously to the second application of the second device and a communication network; and sending, in response to the communication network responding to the communication request, the communication status responding to the communication request synchronously to the first application and the second application to display the communication status.

Optionally, the communication status includes a communication process status or a communication result status; and displaying the communication status responding to the communication request synchronously includes: if the communication status is a communication process status, displaying the communication process status on the second application; and if the communication status is a communication result status, displaying the communication result status synchronously on the first application and the second application.

Optionally, sending the communication request synchronously to the second application of the second device and the communication network includes: sending the communication request to the second application by multiplexing an application layer interface of the second device, and sending the communication request to the communication network by multiplexing a modem processor interface of the second device.

Optionally, the communication function includes at least one of following: a call function; or a short message function.

Optionally, the first device does not have an autonomous communication function, and the second device has an autonomous communication function.

Optionally, the first device is not provided with a subscriber identity module (SIM) card, and the second device is provided with a SIM card.

Optionally, the method further includes: determining the communication status in real time according to the communication request responded by the communication network.

Optionally, the communication process status includes a status of being sent; or, the communication result status includes a status of being successfully sent or failed to send

According to a second aspect of embodiments of the present invention, there is provided a communication method, including: sending, in response to a first application on a first device being triggered to execute a communication function, a communication request corresponding to execution of the communication function to a second device; and displaying a communication status responding to the communication request synchronously on the first application and a second application on the second device; where, the first application and the second application are applications that support execution of the communication function corresponding to the communication request.

Optionally, the communication status includes a communication process status or a communication result status; and displaying the communication status responding to the communication request synchronously includes: if the communication status is a communication result status, displaying the communication result status synchronously on the first application and the second application.

Optionally, the communication function includes at least one of following: a call function; or a short message function.

According to a third aspect of embodiments of the present invention, there is provided a communication apparatus, including: a receiving unit, configured for a second device to receive a communication request sent by a first device, where the communication request is triggered by a first application on the first device; and a display unit, configured to display a communication status responding to the communication request synchronously on the first application and a second application on the second device; where, the first application and the second application are applications that support execution of a communication function corresponding to the communication request.

Optionally, the display unit displays the communication status responding to the communication request synchronously on the first application and the second application on the second device in a following manner, including: sending the communication request synchronously to the second application of the second device and a communication network; and sending, in response to the communication network responding to the communication request, the communication status responding to the communication request synchronously to the first application and the second application to display the communication status.

Optionally, the communication status includes a communication process status or a communication result status; and the display unit displays the communication status responding to the communication request synchronously in a following manner: if the communication status is a communication process status, displaying the communication process status on the second application; and if the communication status is a communication result status, displaying the communication result status synchronously on the first application and the second application.

Optionally, the display unit sends the communication request synchronously to the second application of the second device and the communication network in a following manner: sending the communication request to the second application by multiplexing an application layer interface of the second device, and sending the communication request to the communication network by multiplexing a modem processor interface of the second device.

Optionally, the communication function includes at least one of following: a call function; or a short message function.

According to a fourth aspect of embodiments of the present invention, there is provided communication apparatus includes: a sending unit, configured to send, in response to a first application on a first device being triggered to execute a communication function, a communication request corresponding to execution of the communication function to a second device; and a display unit, configured to display a communication status responding to the communication request synchronously on the first application and a second application on the second device; where, the first application and the second application are applications that support execution of the communication function corresponding to the communication request

Optionally, the communication status includes a communication process status or a communication result status; and the display unit is configured to display the communication status responding to the communication request synchronously: if the communication status is a communication result status, displaying the communication result status synchronously on the first application and the second application.

Optionally, the communication function includes at least one of following: a call function; or a short message function.

According to a fifth aspect of embodiments of the present invention, there is provided a terminal device, including: a processor; and a memory configured to store an instruction executable by the processor; where the processor is configured to perform the communication method according to the first aspect or the second aspect.

According to a sixth aspect of embodiments of the present invention, there is provided a non-transitory computer-readable storage medium storing an instruction. When the instruction in the storage medium is executed by a processor of a terminal device, the terminal device is caused to perform the communication method according to the first aspect or the second aspect.

The technical solution provided by the embodiments of the present invention may include the following beneficial effects: according to that the second device receives the communication request sent by the first device, the communication request is displayed synchronously on the second application of the second device and the first application of the first device, thus reducing the latency of the second device for displaying the communication status, ensuring that the second device timely updates the request from the first device synchronously, facilitating the user to accurately understand the communication process, further improving the user experience.

It is to be understood that the above general description and the following detailed description are exemplary and explanatory only and are not limitations on the present disclosure.

### BRIEF DESCRIPTION OF THE DRAWINGS

The accompanying drawings, which are incorporated in and constitute a part of the description, illustrate embodiments consistent with the disclosure and together with the description serve to explain the principles of the present disclosure.
Fig. 1 is a schematic diagram of communication information transmission between a terminal device without a SIM card and a terminal device with a SIM card in the related art.
Fig. 2 is a flow chart of a communication method according to an example embodiment.
Fig. 3 is a flow chart of a method for displaying a communication status according to an example embodiment.
Fig. 4 is a flow chart of a method for determining a communication status according to an example embodiment.
Fig. 5 is a flow chart of a method for sending a communication request according to an example embodiment.
Fig. 6 is a flow chart of a method for displaying a communication status according to an example embodiment.
Fig. 7 is a schematic diagram of a communication according to an example embodiment.
Fig. 8 is a schematic diagram of a call communication according to an example embodiment.
Fig. 9 is a schematic diagram of a short message communication according to an example embodiment.
Fig. 10 is a block diagram of a communication apparatus according to an example embodiment.
Fig. 11 is a block diagram of a communication apparatus according to an example embodiment.
Fig. 12 is a block diagram of a communication apparatus according to an example embodiment.
Fig. 13 is a block diagram of a communication apparatus according to an example embodiment.

### DETAILED DESCRIPTION

Here, example embodiments will be described in detail, examples of which are shown in the accompanying drawings. When the following description refers to the drawings, unless otherwise indicated, the same numbers in different drawings represent the same or similar elements. The implementations described in the following example embodiments do not represent all implementations consistent with the present disclosure.

The method for using the communication function provided in the embodiments of the present disclosure is applied to a communication scenario of an electronic device. The method for using the communication function involved in the embodiments of the present disclosure is mainly applied to the scenario of communication interaction of the electronic device.

In the related art, when an electronic device without a communication function, such as a terminal device without carrying a subscriber identity module (SIM), performs communication through an electronic device with a communication function, such as a terminal device carrying a subscriber identity module (SIM), the terminal device carrying a SIM card invokes its modem, obtains communication information by using its modem, and transmits the obtained communication information to the application layer. At this time, the communication information reaching the application layer is in a communication status that the transmission has been completed; that is, the communication process status of the communication information cannot be synchronously transmitted to the terminal device carrying a SIM card.

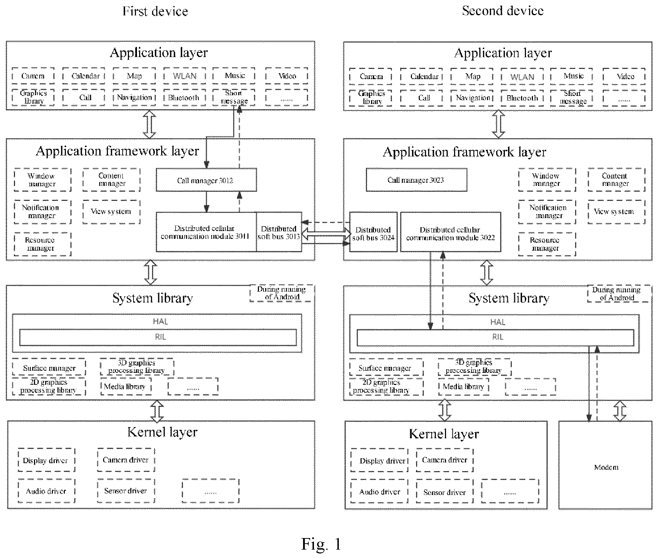

Fig. 1 is a schematic diagram of communication information transmission between a terminal device without a SIM card and a terminal device with a SIM card in the related art. As shown in Fig. 1, after a first device sends a communication request to a second device, the middle layer of the second device invokes the interface for the lower layer transmission, directly transmits the communication request from the first device to the modem, and transmits the communication result to the application layer of the second device and the application layer of the first device through the modem, in which the communication status cannot be displayed on the second device. For example, the communication request from the first device is received the bottom layer of the second device, and the request from the first device is transmitted to the application layer of the second device by using the communication function of the second device, resulting in a long response time of the application layer of the second device and a poor user experience.

In view of this, the interface is multiplexed in the present disclosure. When a device with a communication capability receives a communication request from a device without a communication capability through a distributed soft bus, the interface for upper and lower transmission is multiplexed, thus ensuring that the device with a communication capability synchronously updates the communication request from the device without a communication capability, reducing latency, and further improving the user experience.

The communication method involved in the embodiments of the present disclosure is applied to devices that support a communication function, such as a first device without a SIM card and a second device with a SIM card, where both the first device and the second device run an application that supports a communication function, such as, a call that supports voice communication, or a short message that supports text communication.

The application that supports a communication function involved in the present disclosure is not limited in the present disclosure. In addition, the application involved in the embodiments of the present disclosure may also be referred to as an application function, such as a call function, or a short message function.

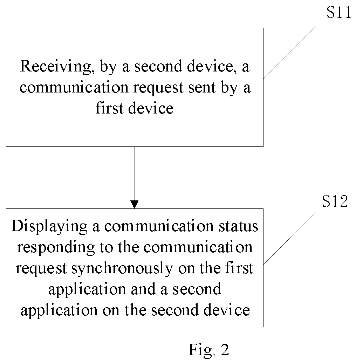

Fig. 2 is a flow chart of a communication method according to an example embodiment. As shown in Fig. 2, the communication method is applied to a terminal, and includes the following steps.

In step S11, a communication request sent by a first device is received by a second device.

In an embodiment, the second device receives the communication request from the first device, for example, through a communication interface between the second device and the first device for receiving the communication request from the first device.

In some embodiments, the communication request is triggered by a first application on the first device. The second device is a device that may receive the communication request sent by the first device and has an autonomous communication function, such as a device with a SIM card. The first device is a device that does not have an autonomous communication function, such as a device without a SIM card.

In step S12, a communication status responding to the communication request is displayed synchronously on the first application and a second application on the second device.

In some embodiments, the first application and the second application are applications that support execution of a communication function corresponding to the communication request.

In an embodiment, the first device sends a communication request to the second device, and the second device displays the communication status of the current communication request from the first device synchronously in a corresponding application, thus minimizing the synchronization latency between the first device and the second device, and improving the user experience.

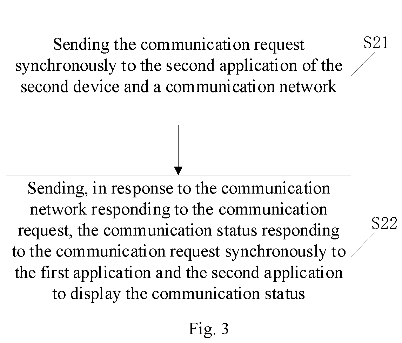

Fig. 3 is a flow chart of a method for displaying a communication status according to an example embodiment. As shown in Fig. 3, the method includes the following steps.

In step S21, the communication request is synchronously sent to the second application of the second device and a communication network.

In an embodiment, the communication request from the first device is sent to the second application of the second device and the communication network through a communication transmission interface.

In step S22, in response to the communication network responding to the communication request, the communication status responding to the communication request is synchronously sent to the first application and the second application to display the communication status.

In an embodiment, according to the communication network responding to the communication request, the communication status after responding to the communication request is concurrently transmitted to the first application and the second application through the communication transmission interface, and the first application and the second application synchronously display the communication status.

In an embodiment, the communication status is determined in real time according to the communication request responded by the communication network, and the communication status is displayed, thus reducing the latency of displaying the communication status by the second device, and increasing the accuracy of displaying the communication status by the second device.

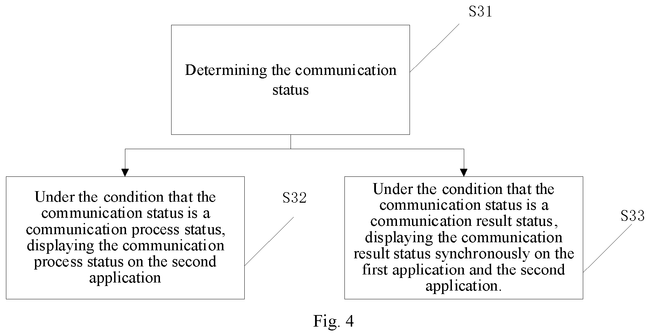

Fig. 4 is a flow chart of a method for determining a communication status according to an example embodiment. As shown in Fig. 4, the method includes the following steps.

In step S31, the communication status is determined.

In some embodiments, the communication status may be understood as a communication process status or a communication result status. For example, the communication process status may be understood as being sent, and the communication result status may be understood as being successfully sent or failed to send.

In step S32, under the condition that the communication status is a communication process status, the communication process status is displayed on the second application.

In an embodiment, when it is monitored that the communication status is a communication process status, such as a status in the process of being sent, the communication process status is displayed synchronously on the application of the second device, such as being sent.

In step S33, under the condition that the communication status is a communication result status, the communication result status is synchronously displayed on the first application and the second application.

In an embodiment, when it is monitored that the communication status is a communication result status, such as being successfully sent or failed to send, the communication result status, such as being successfully sent or failed to send, is displayed synchronously on the first application and the application of the second device.

In an embodiment, the current communication status is determined to be a communication process status or a communication result status, and the current communication type is determined. According to the determined communication status, it is displayed synchronously in the applications of the first device and the second device corresponding to the communication status, thus improving the user experience and facilitating the user to understand the current communication result.

In an embodiment, the application layer interface of the second device is multiplexed to send the communication request to the second application, and the modem processor interface of the second device is multiplexed to send the communication request to the communication network, thus sending the communication request synchronously to the second application of the second device and the communication network.

In an embodiment, an existing interface is multiplexed to transmit the network request to a corresponding processing layer, thus avoiding loss caused by establishing a new interface.

In an embodiment, the communication function includes at least one of the following: a call function, or a short message function.

In an embodiment, the communication function of the second device should have the capability to transmit the communication request from the first device to other devices, such as transmitting a call request or a short message request to other devices.

In an embodiment, the communication functions involved in the present disclosure are only two of the communication functions. A terminal device carrying a SIM card is used to transmit the communication request of a terminal device not carrying a SIM card to other devices, thereby expanding the application scenarios of the first device and the second device and enhancing the connection between the first device and the second device.

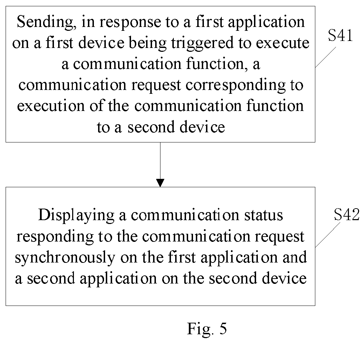

Fig. 5 is a flow chart of a method for sending a communication request according to an example embodiment. As shown in Fig. 5, the method includes the following steps.

In step S41, in response to the application on the first device being triggered to execute a communication function, a communication request corresponding to execution of the communication function is sent to the second device.

In an embodiment, an application on the first device is triggered according to the user's demand, and then a communication function is executed and the communication request is sent to the second device.

In step S42, the communication status responding to the communication request is displayed synchronously on the first application and the second application on the second device.

In some embodiments, the first application and the second application may be understood as applications that support execution of the communication function corresponding to the communication request.

In an embodiment, according to the user's needs, a communication request in the first device is triggered, and then the first device sends the communication request to the second device, thus ensuring information sharing between the first device and the second device, satisfying the user's communication needs, and improving the user experience.

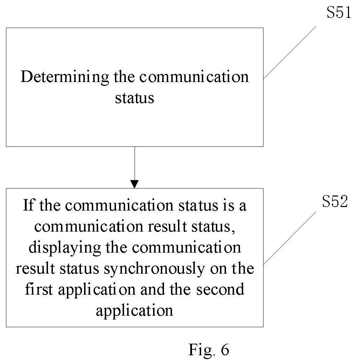

Fig. 6 is a flow chart of a method for displaying a communication status according to an example embodiment. As shown in Fig. 6, the method includes the following steps.

In step S51, the communication status is determined.

In some embodiments, the communication status may be understood as a communication process status or a communication result status. For example, the communication process status may be understood as being sent, and the communication result status may be understood as being successfully sent or failed to send.

In step S52, if the communication status is a communication result status, the communication result status is displayed synchronously on the first application and the second application.

In an embodiment, since the first device is a terminal device that does not carry a SIM card, in the case that the communication status is a communication result status, the communication result status is displayed concurrently in the first device and the second device, so that the user can understand the result of the current communication request, thus facilitating the user to determine whether to perform subsequent operations, such as whether to determine to resend the communication request in the case of a communication failure.

In an embodiment, the communication function includes at least one of the following: a call function, or a short message function.

In an embodiment, the communication function of the first device is the capability to transmit a communication request from the first device to the second device, such as transmitting a call request or a short message request to the second device.

In an embodiment, the communication functions involved in the present disclosure are only two of the communication functions. A terminal device carrying a SIM card is used to transmit the communication request from a terminal device not carrying a SIM card to other devices, thus expanding the application scenarios of the first device and the second device, and enhancing the connection between the first device and the second device.

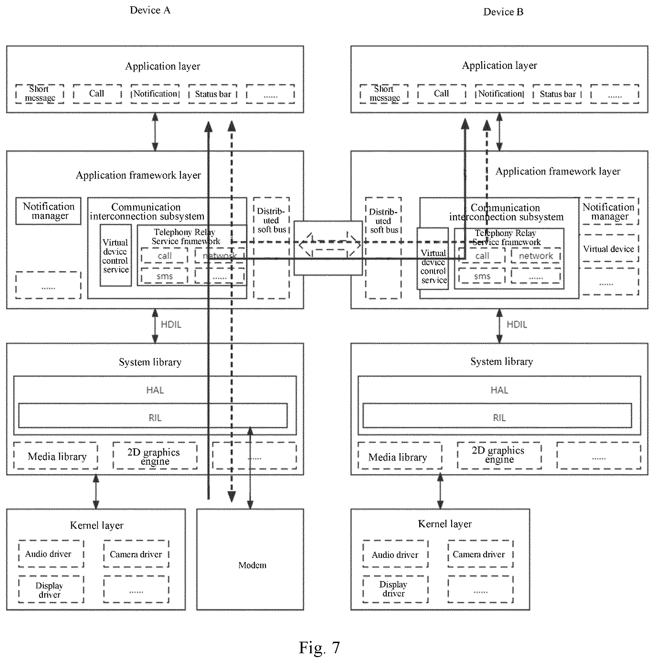

Fig. 7 is a schematic diagram of a communication according to an example embodiment.

In an embodiment, after the distributed soft bus of a same account is established, device B sends a communication request to device A through its own application, such as a request for sending a short message or making a call. After receiving the communication request from device B, the intermediate processing layer of device A, such as the application framework layer and/or the system library, concurrently perform transmission up and down through the intermediate layer of device A, one of which is transmitted to the underlying modem for network request, and the other one is transmitted to the upper application for synchronous update.

In an embodiment, after the underlying network request is completed, the underlying network replies to the update and reports the request, and then transmits it to the upper layer of device A and the upper layer of device B concurrently.

In some embodiments, device A can be understood as a device with a communication capability, such as a device with a SIM card, and device B can be understood as a terminal device with a communication capability, such as a terminal device without a SIM card.

The application layer can be understood as including a series of application packages, such as short messages, calls, notifications, status bars, etc.

The application framework layer can be understood as providing an application programming interface and a programming framework for the applications in the application layer. The application framework layer includes some predefined functions. For example, the application framework layer may include a notification manager, a virtual device, a communication interconnection subsystem, and a distributed soft bus.

The communication interconnection subsystem can be understood as for providing communication functions of device A and device B, such as, the management of a short message status (including being sent, being successfully sent, etc.).

The distributed bus can be understood as a connection channel used to establish a distributed communication module of device A and a distributed communication module of device B, connecting the distributed communication module of device A and the distributed communication module of device B.

In some embodiments, the distributed bus can be responsible for device discovery, self-connection, authentication management, or the like, under the same account in short distance, local area network, or far field. It can also be responsible for scheduling management of different channels, service quality experience evaluation, etc. It is transparent to the application layer, and can also be responsible for channel maintenance, and providing a low-power standby mechanism. It can also be responsible for forwarding/response of the controlplane signaling, and encryption encapsulation, etc.

The notification manager can be understood as to enable the application to display notification information in the status bar. It can be used to convey notification-type messages, and can automatically disappear after a short stay without the user's interaction. For example, the notification manager is used to notify download completion, message reminders, etc. The notification manager can also be a notification that appears in the system top status bar in the form of a chart or scroll bar text, such as a notification of an application running in the background. It can also be a notification that appears on the screen in the form of a dialog window. For example, text information is prompted in the status bar, a prompt sound is emitted, an electronic device is vibrating, and an indicator light is flashing, etc.

The system library can include more than one functional module, such as media libraries, two-dimensional (2D) graphics processing libraries (for example, OpenGLES), HAL, and RIL modules on the HAL. The RIL module is also provided with an HIDL interface.

The media library supports playback and recording of a variety of commonly used audio and video formats, as well as static image files, etc. The media library can support a variety of audio and video encoding formats, such as MPEG4, H.264, H.265, H.266, VP9, MP3, AAC, AMR, JPG, PNG, etc.

The two-dimensional graphics processing library can be understood as being used to implement drawing of two-dimensional graphics, image rendering, synthesis, and layer processing.

The kernel layer can be understood as the layer between hardware and software. The kernel layer includes at least a display driver, a camera driver, an audio driver, and a sensor driver.

In an embodiment, device A timely updates the request from the device B synchronously, thus ensuring that device A displays the status of the communication request in device B in real time, reducing latency and improving the user experience.

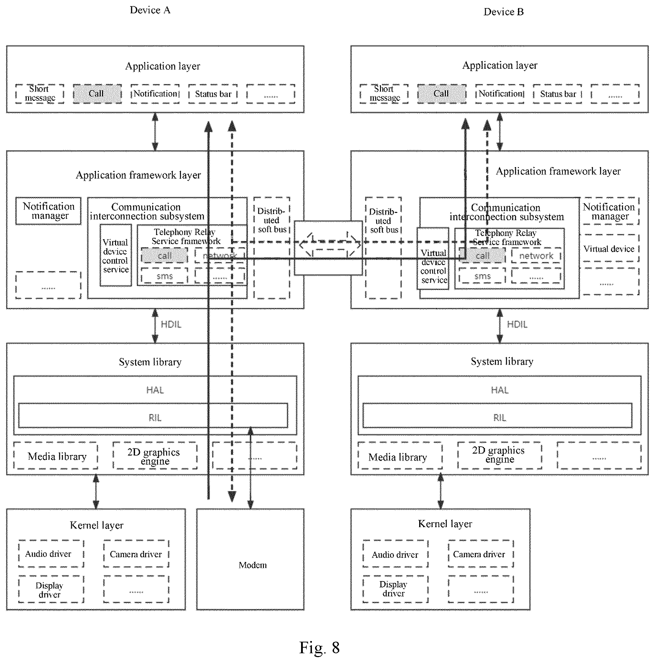

Fig. 8 is a schematic diagram a call communication according to an example embodiment.

In an embodiment, device B sends a request for making a call. After sending the request message to device A through the distributed soft bus, device A synchronously sends the request message upward to the module where the call is located in the application layer, thus informing device A that device B is currently making a call, and simultaneously sends the request downward to the modem of device A.

In an embodiment, after the modem of device A replies that there is a call request sent by device B reaching the application framework layer, the application framework layer performs concurrent transmission, i.e., synchronously transmits the current request status to the module corresponding to the application layer of device A, such as the call module, and simultaneously transmits the request status again to the application framework layer of device B through the distributed soft bus. Then, the request status is transmitted by the application framework layer of device B to the call module.

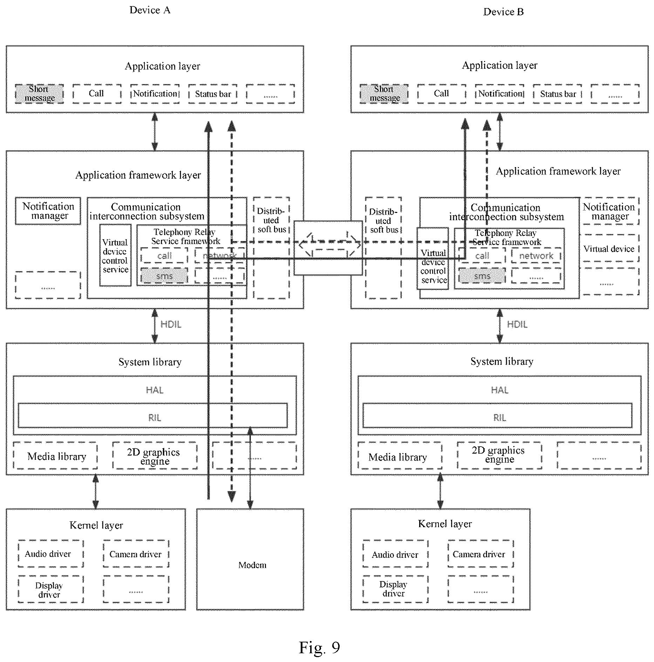

Fig. 9 is a schematic diagram of a short message communication according to an example embodiment.

In an embodiment, device B sends a request for a short message. After sending the request message to device A through the distributed soft bus, device A synchronously sends the request message upward to the module where the short message is located in the application layer, thus informing device A that device B is currently sending a short message, and simultaneously sends the request downward to the modem of device A.

In an embodiment, after the modem of device A replies that there is a short message request sent by device B reaching the application framework layer, the application framework layer performs concurrent transmission, i.e., synchronously transmits the current request status to the module corresponding to the application layer of device A, such as the short message module, and simultaneously transmits the request status again to the application framework layer of device B through the distributed soft bus. Then the request status is transmitted by the application framework layer of device B to the short message module.

Embodiments of the present disclosure further provide a communication apparatus. The communication apparatus may include corresponding hardware structure and/or software module for execution of each function in order to realize the above functions. In combination with the units and algorithm steps of each example disclosed in the embodiment of the present disclosure, a function of the communication apparatus can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to go beyond the scope of the technical solution of the embodiment of the present disclosure.

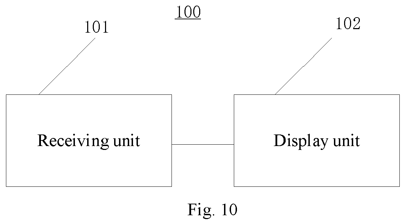

Fig. 10 is a block diagram of a communication apparatus according to an example embodiment. Referring to Fig. 10, the apparatus 100 includes a receiving unit 101 and a display unit 102.

The receiving unit 101 is configured for a second device to receive a communication request sent by a first device, where the communication request is triggered by a first application on the first device.

The display unit 102 is configured to display the communication status responding to the communication request synchronously on the first application and a second application on the second device. The first application and the second application are applications that support execution of the communication function corresponding to the communication request.

In an embodiment, the display unit 102 displays the communication status responding to the communication request synchronously on the first application and the second application on the second device in the following manner: synchronously sending the communication request to the second application of the second device and a communication network; in response to the communication network responding to the communication request, synchronously sending the communication status responding to the communication request to the first application and the second application to display the communication status.

In an embodiment, the communication status is a communication process status or a communication result status. The display unit 102 synchronously displays the communication status responding to the communication request in the following manner: if the communication status is a communication process status, displaying the communication process status on the second application; if the communication status is a communication result status, displaying the communication result status synchronously on the first application and the second application.

In an embodiment, the display unit 102 synchronously sends the communication request to the second application of the second device and the communication network in the following manner: multiplexing a application layer interface of the second device to send the communication request to the second application, and multiplexing a modem processor interface of the second device to send the communication request to the communication network.

In an embodiment, the communication function includes at least one of the following: a call function, or a short message function.

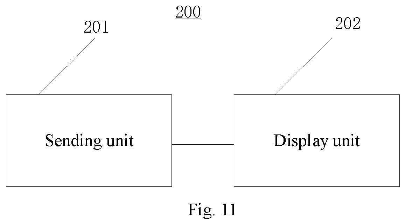

Fig. 11 is a block diagram of a communication apparatus according to an example embodiment. Referring to Fig. 11, the apparatus 200 includes a sending unit 20 1 and a display unit 202.

The sending unit 201 is configured to, in response to an application on the first device being triggered to execute a communication function, send a communication request corresponding to execution of the communication function to the second device.

The display unit 202 is configured to display a communication status responding to the communication request synchronously on the first application and a second application on the second device. The first application and the second application are applications that support execution of the communication function corresponding to the communication request.

In an embodiment, the displayed communication status is a communication process status or a communication result status. The display unit 202 is configured to synchronously display the communication status responding to the communication request. If the communication status is a communication result status, the communication result status is displayed synchronously on the first application and the second application.

In an embodiment, the communication function includes at least one of the following: a call function, or a short message function.

Regarding to the apparatus in the above embodiments, the specific manners in which each module performs operations have been described in detail in the embodiments of the method, and will not be described in detail here.

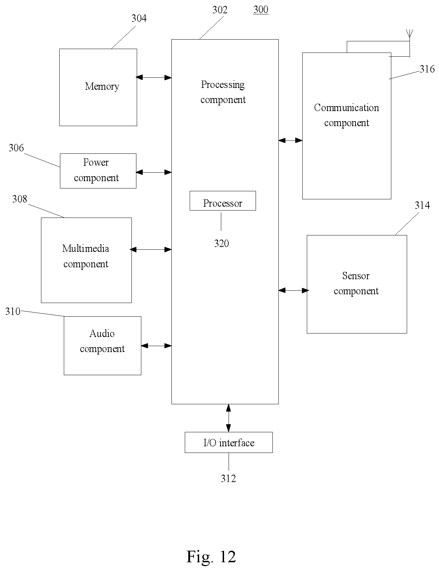

Fig. 12 is a block diagram of a communication apparatus 300 according to an example embodiment. For example, the apparatus 300 may be a mobile phone, a computer, a digital broadcast terminal, a messaging transceiver, a game console, a tablet device, a medical device, a fitness device, a personal digital assistant, etc.

Referring to Fig. 12, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operations of the apparatus 300, such as operations associated with display, phone calls, data communications, camera operations, and recording operations. The processing component 302 may include one or more processors 320 to execute an instruction to complete all or part of the steps of the above-mentioned method. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the apparatus 300. Examples of such data include instructions for any application or method operating on the apparatus 300, contact data, phone book data, messages, pictures, videos, etc. The memory 304 can be implemented by any type of volatile or non-volatile storage device or a combination of them, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 306 provides power to the various components of the apparatus 300. The power component 306 may include a power management system, one or more power supplies, and other components associated with generating, managing, and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundaries of the touch or sliding action, but also detect the duration and pressure associated with the touch or sliding operation. In some embodiments, the multimedia component 308 includes a front camera and/or a rear camera. When the apparatus 300 is in an operating mode, such as a shooting mode or a video mode, the front camera and/or the rear camera may receive external multimedia data. Each of the front camera and rear camera may be a fixed optical lens system or have a focal length and an optical zoom capability.

The audio component 310 is configured to output and/or input audio signals. For example, the audio component 310 includes a microphone (MIC). When the apparatus 300 is in an operating mode, such as a call mode, a recording mode, and a speech recognition mode, the microphone is configured to receive an external audio signal. The received audio signal can be further stored in the memory 304 or sent through the communication component 316. In some embodiments, the audio component 310 also includes a speaker for outputting audio signals.

I/O interface 312 provides an interface between the processing component 302 and peripheral interface modules, such as keyboards, click wheels, buttons, etc. These buttons may include but are not limited to a home button, a volume button, a start button, and a lock button.

The sensor component 314 includes one or more sensors for providing status assessment of various aspects of the apparatus 300. For example, the sensor component 314 can detect the open/closed status of the apparatus 300, the relative positioning of components, such as the display and the keypad of the apparatus 300. The sensor component 314 can also detect the position change of the apparatus 300 or a component of the apparatus 300, the presence or absence of user contact with the apparatus 300, the orientation or acceleration/deceleration of the apparatus 300, and the temperature change of the apparatus 300. The sensor component 314 can include a proximity sensor configured to detect the presence of a nearby object without any physical contact. The sensor component 314 can also include an optical sensor, such as a CMOS or CCD image sensor, for use in imaging applications. In some embodiments, the sensor component 314 can also include an accelerometer, a gyroscope sensor, a magnetic sensor, a pressure sensor, or a temperature sensor.

The communication component 316 is configured to facilitate wired or wireless communication between the apparatus 300 and other devices. The apparatus 300 can access a wireless network based on a communication standard, such as WiFi, 2G or 3G, or a combination of them. In an example embodiment, the communication component 316 receives a broadcast signal or broadcast-related information from an external broadcast management system via a broadcast channel. In an example embodiment, the communication component 316 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an example embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, there is further provided a non-transitory computer-readable storage medium including an instruction, such as a memory 304 including an instruction. The instruction can be executed by the processor 320 of the apparatus 300 to perform the above method. For example, the non-transitory computer-readable storage medium can be a ROM, a random access memory (RAM), a CD-ROM, a magnetic tape, a floppy disk, an optical data storage device, etc.

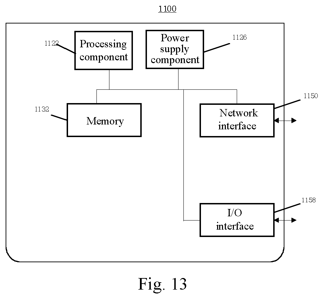

FIG. 13 is a block diagram of a communication apparatus 1100 according to an example embodiment. For example, the apparatus 1100 may be provided as a server. Referring to FIG. 13, the apparatus 1100 includes a processing component 1122, which further includes one or more processors, and a memory resource represented by a memory 1132 for storing instructions executable by the processing component 1122, such as an application. The application stored in the memory 1132 may include one or more modules, each of which corresponding to a set of instructions. In addition, the processing component 1122 is configured to execute instructions to perform the above method.

The apparatus 1100 may also include a power supply component 1126 configured to perform power management of the apparatus 1100, a wired or wireless network interface 1150 configured to connect the apparatus 1100 to a network, and an input/output (I/O) interface 1158. The apparatus 1100 may operate based on an operating system stored in the memory 1132, such as Windows ServerTM, Mac OS XTM, UnixTM, LinuxTM, FreeBSDTM, or the like.

It is understood that in the present disclosure, "plurality" refers to two or more than two, and other quantifiers are similar to it. "And/or" describes the association relationship of associated objects, indicating that three relationships may exist. For example, A and/or B can represent: A exists alone, A and B exist simultaneously, and B exists alone. The character "/" generally indicates that the associated objects before and after are in an "or" relationship. The singular forms "a", "said" and "the" are also intended to include the plural forms, unless other meanings are clearly indicated in the context.

It can be further understood that the terms "first", "second", etc., are used to describe various information, but such information should not be limited to these terms. These terms are only used to distinguish the same type of information from each other, and do not indicate a specific order or degree of importance. In fact, the expressions of "first", "second", etc., can be used interchangeably. For example, without departing from the scope of the present disclosure, the first information can also be referred to as the second information, and similarly, the second information can also be referred to as the first information.

It can be further understood that the orientations or position relationships indicated by terms "front", "back", "up", "down", "top", "bottom", etc., are based on the orientations or position relationships shown in the accompanying drawings, and are only for the convenience of describing the present embodiment and simplifying the description, and do not indicate or imply that the referred apparatus or element must have a specific orientation, be constructed and operated in a specific orientation.

It can be further understood that, unless otherwise specified, "connection" includes a direct connection without other components between the two, and also includes an indirect connection with other components between the two.

It can be further understood that, although the operations are described in a specific order in the drawings in the embodiments of the present disclosure, it should not be understood as that the operations are required to be performed in a specific order shown or in a serial order, or all the operations shown are required to be executed to obtain the desired results. In certain environments, multitasking and parallel processing may be advantageous.

## Claims

1. A communication method, comprising:
receiving (S11), by a second device, a communication request sent by a first device, wherein the communication request is triggered by a first application on the first device; and
displaying (S12) a communication status responding to the communication request synchronously on the first application and a second application on the second device;
wherein the first application and the second application are applications that support execution of a communication function corresponding to the communication request.

2. The method according to claim 1, wherein displaying (S12) the communication status responding to the communication request synchronously on the first application and the second application on the second device comprises:
sending (S21) the communication request synchronously to the second application of the second device and a communication network; and
sending (S22), in response to the communication network responding to the communication request, the communication status responding to the communication request synchronously to the first application and the second application to display the communication status.

3. The method according to claim 1 or 2, wherein the communication status comprises a communication process status or a communication result status; and
displaying (S12) the communication status responding to the communication request synchronously comprises:
in response to the communication status being a communication process status, displaying (S32) the communication process status on the second application; or
in response to the communication status being a communication result status, displaying (S33) the communication result status synchronously on the first application and the second application.

4. The method according to claim 2 or 3, wherein sending (S21) the communication request synchronously to the second application of the second device and the communication network comprises:
sending the communication request to the second application by multiplexing an application layer interface of the second device, and sending the communication request to the communication network by multiplexing a modem processor interface of the second device.

5. The method according to any one of the preceding claims , wherein the communication function comprises at least one of
a call function; or
a short message function.

6. The method according to any one of the preceding claims, wherein the first device does not have an autonomous communication function, and the second device has an autonomous communication function.

7. The method according to claim 6, wherein the first device is not provided with a subscriber identity module (SIM) card, and the second device is provided with a SIM card.

8. The method according to any one of the preceding claims 2-7, further comprising:
determining (S31) the communication status in real time according to the communication request responded by the communication network.

9. The method according toany one of the preceding claims 3-7, wherein the communication process status comprises a status of being sent; or
the communication result status comprises a status of being successfully sent or failed to send.

10. A communication method, comprising:
sending (S41), in response to a first application on a first device being triggered to execute a communication function, a communication request corresponding to execution of the communication function to a second device; and
displaying (S42) a communication status responding to the communication request synchronously on the first application and a second application on the second device;
wherein the first application and the second application are applications that support execution of the communication function corresponding to the communication request.

11. The method according to claim 10, wherein the communication status comprises:
a communication process status or a communication result status; and
displaying the communication status responding to the communication request synchronously, comprises:
in response to the communication status being a communication result status, displaying (S51) the communication result status synchronously on the first application and the second application.

12. The method according to claim 10 or 11, wherein the communication function comprises at least one of
a call function; or
a short message function.

13. A communication apparatus (100), comprising:
a receiving unit (1201), configured for a second device to receive a communication request sent by a first device, wherein the communication request is triggered by a first application on the first device; and
a display unit (102), configured to display a communication status responding to the communication request synchronously on the first application and a second application on the second device;
wherein, the first application and the second application are applications that support execution of a communication function corresponding to the communication request.

14. A communication apparatus (200), comprising:
a sending unit (201), configured to send, in response to a first application on a first device being triggered to execute a communication function, a communication request corresponding to execution of the communication function to a second device; and
a display unit (201), configured to display a communication status responding to the communication request synchronously on the first application and a second application on the second device;
wherein, the first application and the second application are applications that support execution of the communication function corresponding to the communication request.

15. A non-transitory computer-readable storage medium storing an instruction that, when executed by a processor of a terminal, causes the terminal to perform the method according to any one of claims 1 to 12.
